(19) **Europäisches Patentamt**

**European Patent Office**

**Office européen des brevets**

(11) **EP 1 043 666 A2**

(12) **EUROPEAN PATENT APPLICATION**

(43) Date of publication:
11.10.2000 Bulletin 2000/41

(51) Int. Cl.7: **G06F 17/30**

(21) Application number: 00107416.0

(22) Date of filing: 05.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 07.04.1999 US 287928

(71) Applicant:
**Reclaim Technologies and Services, Ltd.**
**Newark, State of Ohio 43055 (US)**

(72) Inventor: **Mccormack, Douglas R.**
**Ontario P7A 4L4 (CA)**

(74) Representative:
**Ebner von Eschenbach, Jennifer**
**c/o Ladas & Parry,**
**Dachauerstrasse 37**
**80335 München (DE)**

(54) **A system for identification of selectively related database records**

(57) An automated system for identifying selectively related database records as determined by the user. The invention can be used with a wide variety of different types of data in nearly any industry. The system has the capability of using either a matching technique for a specifically targeted data record or a clustering technique to identify groups or clusters of related records in a database. The relationship between each of the various records in a given database is determined by a value of importance and matching method that are assigned by the user to each data field contained within the database record. The system uses the value of importance and the matching method to calculate a degree of belonging value ("DOB") between the database records and a specifically targeted record or a plurality of reference points disbursed throughout the range of data. The database records' DOBs are then used by the system to identify related database records. The invention concludes by producing a tabulation of related database records for easy analysis or verification by the user. In this manner, related records in a database may be readily identified which would otherwise likely be overlooked when using conventional query methods.

FIG. 1

**EP 1 043 666 A2**

**Description**

This invention relates to a system comprising a method or apparatus, or both, for identifying selectively related database records based on user assigned values of importance and matching methods for each data field. More specifically, the invention uses fuzzy logic and data mining techniques to identify related database records as defined by the user.

Since the beginning of the computer age, computer systems have been effective in accumulating and storing huge volumes of data. These early computer systems' analysis of volumes of data have focused primarily on lower level individual transactions. However, today it is increasingly important for computer systems to conduct higher level evaluations, knowledge discovery and decisions based on increasing volumes of data.

This new demand for computer systems to make decisions and recognize trends from large volumes of data has resulted in the development of various computer systems known as expert systems and artificial intelligence. These systems that process large volumes of data frequently use a computer software technique called data mining. Data mining is a technology that uses statistical techniques to find correlation among disparate items of data contained in large databases. Data mining involves identifying patterns and trends in data and the analysis of that data towards the creation of new knowledge. The primary goal of data mining is to uncover important information that is hidden in huge volumes of data.

Although some specialized computer systems have been developed to analyze and make decisions regarding data, significant problems still exist. One such problem is the identification of related database records that do not contain the same exact data. This problem is not limited to any one industry, it occurs when attempting to identify related insurance claims as well as when trying to identify related fingerprints, and a myriad of other data intensive evaluations.

One of the biggest obstacles in creating a computer system that can identify related database records is binary logic. Binary logic has only two states, "Ø" for false and "1" for true. Most computers and their programming software are based on binary logic. Therefore, it is very difficult for these computers to recognize matters that are more accurately represented somewhere in between the Ø and 1 states.

A new approach to representing computer knowledge has emerged in the last thirty years, which has become a rapidly developing technology. This new technology is known as "fuzzy" logic. Fuzzy logic has been used for knowledge modeling because it is capable of handling the uncertainty in the world around us. This uncertainty, or fuzziness, is inadequately addressed with binary logic or traditional Boolean logic. Fuzzy logic systems are described for example, in the following publications:

(1) Fuzzy Logic: A Practical Approach, by McNeill, et al., AP Professional, 1994; and

(2) The Fuzzy Systems Handbook, by Cox, AP Professional, 1994.

Any logic system consists of variables, sets and rules. Existing systems based on the original (Ø to 1) set theory, which is the basis for binary code, evaluates truth based on its existence or non-existence. Membership in a set is determined by asking whether something is a member and answering "yes" or "no". This type of thinking, also known as "crisp" logic, is flawed in that truth often lies somewhere between existence and non-existence. To describe these situations which fall somewhere in between, or "sort of" fuzzy, fuzzy logic uses linguistic variables. Fuzzy sets can then be created which are associated with a linguistic variable. Each member of the set is assigned a degree of membership, degree of belonging or degree of similarity in the set, the degree of similarity usually being represented by a percentage. Crisp logic is incorporated into fuzzy logic at the extremities. Members of a fuzzy set with degrees of similarity equal to 0% and 100% correspond to crisp logic values Ø and 1.

Linguistic variables and fuzzy sets are then used to create fuzzy rules which are the basis of a fuzzy system. An advantage of fuzzy logic is that once translated from crisp data to linguistic variables and fuzzy sets, information may be manipulated by the well-established principles of mathematics. At the end of the process, the information is again translated and output as crisp data. These fuzzy systems are capable of simply describing, complex non-linear systems.

Fuzzy logic has been used in conjunction with neural networks combining the formers ability to deal with uncertainty with the latter's ability to classify and to pattern match. A neural network consists of a system of nodes and weighted links. Signals to a given node are strengthened if they lead to a correct result and weakened if they lead to an incorrect result which "teaches" the network a pattern which may be used to process new data. Neural networks are not based on rules and logic structures. Fuzzy systems have been used as control systems for neural networks while neural networks have been used to produce fuzzy rules. Fuzzy systems can be used to identify "related" database records by determining which database records have fuzzy relationship between each other or a specific record.

A large number of companies lose vast sums of money each year because their existing computer systems are unable to identify related database records. These losses could be the result of data entry personnel mis-typing an account number or client name that the computer system is attempting to locate. These types of data entry errors adversely affect a corporation's productivity and efficiency. For example, losses resulting from a computer systems' inability to identify related insurance claims could cost an insurance company millions of dollars in reinsurance claims. A computer system that could be universally applied to all types of data and which utilizes data mining, fuzzy logic and neural network techniques to identify selectively related database records would be of great value to any number of companies having large amounts of data to analyze.

An object of the present invention is to provide a system comprising a method or apparatus, or both, that can be used with a wide variety of different types of data for identification of selectively related database records as defined by the user.

Another object of this invention is to identify database records selectively related to a specifically targeted database record.

A further object of this invention is to identify clusters of database records where all members of a cluster are selectively related to each other.

Another object of the invention provides for a method for identifying relationships between data records within a database in accordance with predetermined selection criteria, comprising the steps of:

   providing a database containing a plurality of data records each having data fields in a predetermined, common format;
   assigning a value of importance to selected data fields within selected records for use in determining said relationships between said data records;
   assigning a matching value to selected data fields within select records for use in determining said relationship between said data records;
   selecting a mode for processing said assigned values from a plurality of data processing modes;
   deriving a first degree of belonging between each data record within said database and mode-specific reference criteria;
   assigning said degree of belonging to each of said data records into a project record corresponding to each said data record;
   selecting said data records having a predetermined first degree of belonging; and grouping said select data records for storage, further processing and/or analysis.

Yet another object of the invention is a data processing system for determining relationships between data records in a database, comprising:

   a computing device having a processor for processing data, said computing device having a first memory means for storing machine-executable commands and a second memory means for storing said data records;
   an input device for accepting instructions and/or data from an outside source;
   an output device for conveying processed data in a perceivable manner; and
   a data processing routine for identifying relationships between data records in a database wherein said routine:
   derives a first degree of belonging between each data record within said database and mode-specific reference criteria based upon assigned values of importance and matching corresponding to select data records;
   assigns a degree of belonging to each of said data records into a project record corresponding to each said data record;
   selects said data records having a predetermined first degree of belonging; and groups said select data records for storage, further processing and/or analysis.

This, together with other objects of the invention, will become apparent from the following Detailed Description of the invention and the accompanying drawings.

The present invention is an automated system, comprised of a method or apparatus, or both, for identifying selectively related database records as determined by the user where the database records contain data regarding the same type of activity. The present invention is currently available from ReClaim Technologies & Services, Ltd., of Newark, Ohio under the trademark GeekSuite™. The system can be used with a wide variety of different types of data to identify, for example, related insurance claims, chemical formulations, medical diagnoses, photographs, fingerprints, voice patterns, etc., for finding suspects, determining fraud, illnesses or for filing reinsurance claims.

The system has the capability of using either a matching technique or a clustering technique to identify related database records. The matching technique is employed when the user wants to identify database records related to a specifically targeted record. The clustering technique is used when the user wants to identify groups or clusters of database records which are not related to a specifically targeted record, but are related to each other based on similarity.

The similarity between the various database records is determined by a user-defined criteria. The user-defined criteria consists of a value of importance and a matching method being assigned to each data field contained within the database records. The value of importance assigned to each data field is a number selected by the user between Ø and 1ØØ. The value of importance number indicates the strength of each data field's contributions in determining the degree of belonging value ("DOB") or relatedness between any pair of database records or between a database record and a reference point.

The matching method that the user assigns to each data field indicates what type of matching the present invention performs on each data field. Since a database record can contain different types of data in each data field, the user will indicate the appropriate type of match to be performed by the system. The user may want to perform a number of different types of matches, including Numeric Value Matching, Date/Time Matching, Spelled-Like Matching, Sounds-Like Matching, Surname Matching, Keyword Matching, etc., depending on the particular data contained in the data fields.

Using the matching technique, the system calculates one DOB between the specifically targeted record and each of the other database records based on the value of importance and the closeness of match assigned to each data field. The system uses the DOBs to identify database records related to the specifically targeted record.

However, if the clustering technique is being used, the system calculates DOBs between each database record and a plurality of reference points called "marker posts." These marker posts are pseudo-records, widely scattered throughout the range of data. A first marker post could be positioned in the range of data based on all of the first marker post's data fields values being set to the maximum amount. A second marker post could be positioned at a different location in the range of data by setting all of its data fields' values to their minimum amount. A third marker post could be positioned in the range of data based on half of the data fields' values being set to their maximum amount and the other half of the data fields being set to their minimum amount. A fourth marker post may be positioned in the range of data, based upon all of the fourth marker post's data field values being set to the average amount, and so on. The system uses each of the DOBs between the database records and the marker posts to produce a cluster of related database records.

The system produces a final tabulation of related database records using either the matching technique or the clustering technique. This tabulation may be output to a printer for a hard copy, or to a video screen for immediate analysis or verification by the user.

For a fuller understanding of the invention, reference should be made to the accompanying drawings and Detailed Description of the invention.

Fig. 1 is a flow chart illustrating the steps of a preferred embodiment of the present invention;

Fig. 2 is a generic data structure or database record for storing data regarding a particular transaction or thing;

Fig. 3 is a conceptual representation of four database records with three marker posts disbursed throughout the range of data;

Fig. 4 is a conceptual representation of four database records with three marker posts disbursed throughout the range of data and a project file containing four project records which correspond to each of the four database records;

Fig. 5 is a representation of a screen employed by the user upon the conclusion of a matching mode search for manual intervention in the method of the invention; and

Fig. 6 is a representation of a screen employed by the user upon the conclusion of clustering mode search for manual intervention in the method of the invention.

The present invention is an automated system, comprising a method or apparatus, or both, for identifying selectively related database records 100 as determined by the user where the database records contain data regarding the same type of transaction or other identifiable criteria. The system is comprised of a machine-executable data processing routine resident on a computing means with an operator input means, data conveyance means (display or other perceivable readout) and data storage capabilities. The invention can be used with different types of data ranging from photographs, medical diagnoses fingerprints, chemical formulations, etc., for finding suspects, determining fraud or illnesses or for filing reinsurance claims. For purposes of illustration, insurance claim data will be used for discussion in this Detailed Description.

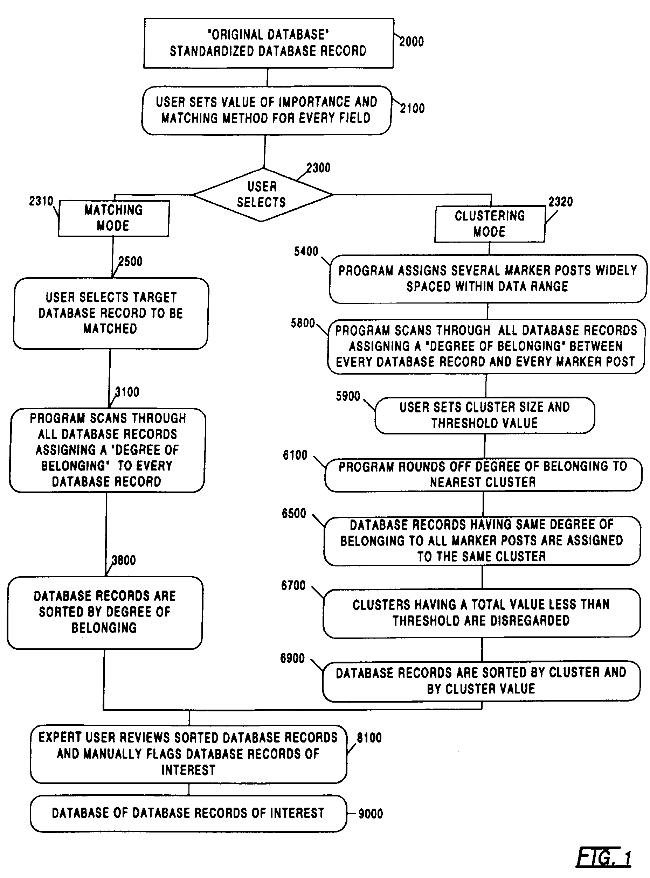

Referring first to Fig. 1, a flow chart depicting an embodiment of the present invention is shown. The system comprises the following steps: the data to be analyzed is organized in a standardized data file or database record 2000 ("Original Database"); the user sets a value of importance number and match type for each data field 102-122 contained in the database records 2100; the user selects whether a matching mode 2310 or a clustering mode 2320 search is to be performed on the data 2300; if matching mode 2310 is selected the user has to enter a target database record ("target record") to be matched 2500; the program then scans through all database records 100 assigning a degree of match or degree of belonging ("DOB") between the target record and each of the other database records 3100; if matching mode was chosen by the user, the database records 100 are sorted based on their matching mode DOB 3800; if the user selects clustering mode 2320, the program assigns several reference points ("marker posts") 200-220 widely spaced within the data range 5400; the program then scans through all of the database records 100 assigning a clustering mode DOB between every database record 100 and each marker post 5800; the user selects the cluster size and a threshold value 5900; the program rounds off the clustering mode DOB to the nearest cluster 6100; the database records 100 having the same rounded clustering mode DOB to all marker posts 200-220 are assigned to the same cluster 6500; clusters having a total value less than the threshold value are disregarded 6700; the database records 100 are sorted by cluster and by cluster value 6900; upon completion of either the matching mode 2310 or the clustering mode 2320 routines, the selected database records are displayed to the user for further analysis 8100; and then the database records selected by the user are output to a separate data file 9000.

Once the user has decided what type of data will be analyzed, the user selects a standardized format for the database records 100. The standardized format or Original Database 2000 to be used will depend on the type of data to be processed. A typical Original Database 2000 could include a database record 100 containing 30 to 50 data fields of specific insurance claim information. These data fields might include for example, a claim number, accident year, company name, profit area, policy number, annual statement line, policy type, work line coverage, policy state, risk state, latitude, longitude, accident city, accident county, accident state, policy start date, policy end date, date of loss, date of report, status as being opened or closed, a catastrophe code number, type of loss, cause of loss, claimant number, accident code, amount paid to date, amount outstanding, amount allocated, expenses, recoveries to date, etc. Understandably, the specifics of these data fields will vary from industry to industry and the type of data being collected.

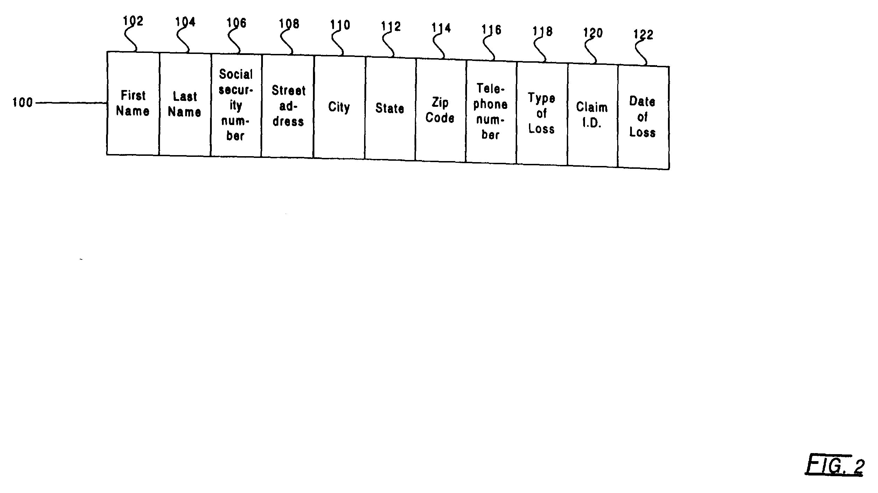

Fig. 2 shows an example of a standardized database record 100 which is comprised of 11 data fields 102-122 containing insurance claim information. However, as stated previously, the database record 100 could consist of 50 or more data fields. The Original Database 2000 would consist of thousands and even millions of database records 100 each having the same standardized format. After the Original Database 2000 is full of database records 100 to be analyzed, the user can begin processing the data to identify selectively related database records 100.

The similarity between the database records 100 is determined by a two-part user-defined criteria. The user-defined criteria consists of a value of importance and a matching method being assigned to each data field 102-122 contained within the database records 100. The value of importance is a number from "∅" to "1∅∅" assigned by the user to each data field 102-122. The value of importance number represents the strength of each data field's contribution in determining the DOB or similarity of each database record 100. For example, the user could assign the maximum value of importance of 1∅∅ to the Social Security Number data field 106 to identify all database records 100 that contain insurance claim information regarding the same person. The user could alternatively set the value of importance to the minimum of ∅ for the Social Security Number data field 106 and make the Date of Loss data field 122 equal to 1∅∅ to identify database records 100 that contain insurance loses that occurred near the same date. The user has the ability to determine the importance each data field 102-122 will have in determining the overall similarity of the database records 100.

Conversely, the matching method that the user assigns to each data field 102-122 indicates what type of matching is to be performed on each particular data field. Since a database record 100 can contain different types of data in each data field 102-122, the user selects the appropriate type of match to be performed on the data contained in each individual data field. The different types of matching methods the user could choose for any particular data field 102-122 includes: Numeric Value Matching, Date/Time Matching, Spelled-Like Matching, Sounds-Like Matching, Surname Matching, etc. For example, the user could choose the Spelled-Like Matching for the Last Name data field 104. Similarly, the user may choose to perform Numeric Value Matching on the Claim I.D. data field 120 using the same type of fuzzy logic.

The present invention uses several different types of DOB algorithms in the processing of the data to determine similarity. First, a DOB value is calculated between each data field 102-122 contained in every database record 100 and each data field in the target record or each marker posts 200-220. Second, an overall DOB value is calculated between each database record 100 and the target record or marker posts 200-220. The overall DOB is derived from the data field 102-122 DOBs results.

Examples of some algorithms used to calculate various DOB are as follows:

**Ex.1**    How Numeric DOB is calculated:

Set Delta = Difference in value between the two records being considered.

Set DeltaMax = Difference in value between the minimum and maximum value for this field over the entire database.

$$[\text{Date/Time DOB} = (1 - (\text{Delta/DeltaMax})) \times 100]$$

**Ex. 2** How Date/Time DOB is calculated:

Set Delta - Difference in days plus fraction of day between the two records.
Set DeltaMax = Difference in days plus fraction of day between the earliest and latest date for this field over the entire database.

$$[\text{Numeric DOB} = (1 - (\text{Delta/DeltaMax})) \times 100]$$

**Ex. 3** How Spelled-Like DOB is calculated:

The following is a description of the Gestalt algorithm published by Ratcliff and Metzener on page 46 of Dr. Dobbs Journal; July, 1988.

Let P and Q represent the two strings to be compared.
Find string S as the widest common substring shared by P and Q.
Let PL represent the portion of P remaining to the left of S.
Let PR represent the portion of P remaining to the right of S.
Let QL represent the portion of Q remaining to the left of S.
Let QR represent the portion of Q remaining to the right of S.
Let SL represent the widest common substring shared between PL and QL.
Let SR represent the widest common substring shared between PR and QR.

$$[\text{Spelled-Like DOB} = [\text{Length (S)} + \text{Length (SL)} + \text{Length (SR)}]/[\text{Length (P)} + \text{Length (Q)}] \times 200]$$

**Ex. 4** How Sounds - Like DOB is calculated:

The following is a description of a typical implementation of a soundex algorithm.
This algorithm is intended only for the English language. The final fuzzification of the result was devised by CorMac Technologies, Inc.

Take each of the two strings and convert them to their soundex code as follows:
Convert to upper case and remove any non-alphabetic characters.
Replace any double letters with single letter.
Remove all vowels, "H" and "W" except leave the first letter of the string as is.
Beginning with the second letter of the string, step through one character at a time making the following replacements:

Replace "B", "F", "P", "V" with "1"
Replace "C", "G", "J", "K", "Q", "S", "X", "Z" with "2"
Replace "D", "T" with "3"
Replace "L" with "4"
Replace "M", "N" with "5"
Replace "R" with "6"

The result is the completed soundex code.

Fuzzify the amount of similarity in the two soundex codes by submitting them to the "Spelled-Like" (Gestalt) technique described above.

**Ex. 5** How Surname DOB is calculated:

The following is a description of the soundex algorithm customized for surname matching. The final fuzzification of the result was devised by CorMac Technologies, Inc.

Take each of the two strings and convert them to their surname soundex code as follows:
Convert to upper case and remove any non-alphabetic characters.

If the string begins with "MAC," change to "MCC".

If the string begins with 'SCH", change to "SSS:.
If the string begins with "KN", change to "NN".
If the string begins with "PF", change to "FF".
<u>Do not</u> make any changes to the first letter beyond this point.
Change any "DG" to "GG".
Change any "CAAN" to "TAAN".
Change any "D" to "T".
Change any "NST" to "NSS".
Change any "AV" to "AF".
Change any "Q" to "G"
Change any "Z" to "S".
Change any "M" to "N".
Change any "KN" to "NN".
Change any "K" to "C"
Change any "AH" to "AA"
Change any "HA" to "AA".
Chang any "AW" to "AA".
Change any "PH" to "FF".
Change any "SCH" TO "SSS".
If the string now ends in "A" or "S" then remove that character.
If the string now ends in "NT" then change to "TT".
Now remove all vowels ("A", "E", "I", "O", "U", "Y").
Now change all double letters to single letters.

The result is the completed surname-soundex code.

Fuzzify the amount of similarity in the two surname-soundex codes by submitting them to the "Spelled-Like" (Gestalt) technique described above.

**Ex. 6** <u>How Keyword DOB is calculated:</u>

If the field being considered contains at least one of the specified keywords, then Keyword DOB = 1.
If the field being considered does not contain any of the specified keywords, then Keyword DOB = 0.

**Ex. 7** <u>How Overall DOB for a database record is calculated:</u>

Once all of the fields have been assigned a DOB value, it is necessary to combine all these DOB values into one overall value.
The method is analogous to calculating vector lengths in multi-dimensional space. For every field having importance greater than zero,
Change Field DOB to Field Delta using

$$[Delta = 1 - DOB/100]$$

Change Field Delta to Adjusted Field Delta using

$$Adjusted\ Delta = Delta \times Delta \times Importance/100.$$

Let Z represent the sum of all Adjusted Field Deltas.
Let S represent the sum of all {Field Importances/100}

$$Overall\ DOB = [1 - Square\ Root\ (Z/S)] \times 100$$

There are numerous variations to the above-referenced algorithms and a variety of different types of matching methods that could be performed or utilized by the present invention. It is simply a matter of plugging the desired algorithm into the present invention. Therefore, it should be appreciated by those skilled in the art that the present invention is not restricted to using only the algorithms referenced in the above examples.

After the original data is in a standardized format Original Database 2000 with values of importance and match methods assigned to each data field 102-122, the user selects a search mode 2300. The user has the choice of employing the invention in either matching mode 2310 or in clustering mode 2320. The matching mode 2310 is employed when the user wants to identify database records 100 related to a specifically targeted record. In one embodiment, the target record could be either manually entered into the system or set to an existing database record 100 from the Original Database 2000. The invention then calculates a matching mode DOB 300 between the specifically targeted record and each of the other database records 100 contained in the Original Database 2000, as shown in Fig. 1 at block 3100.

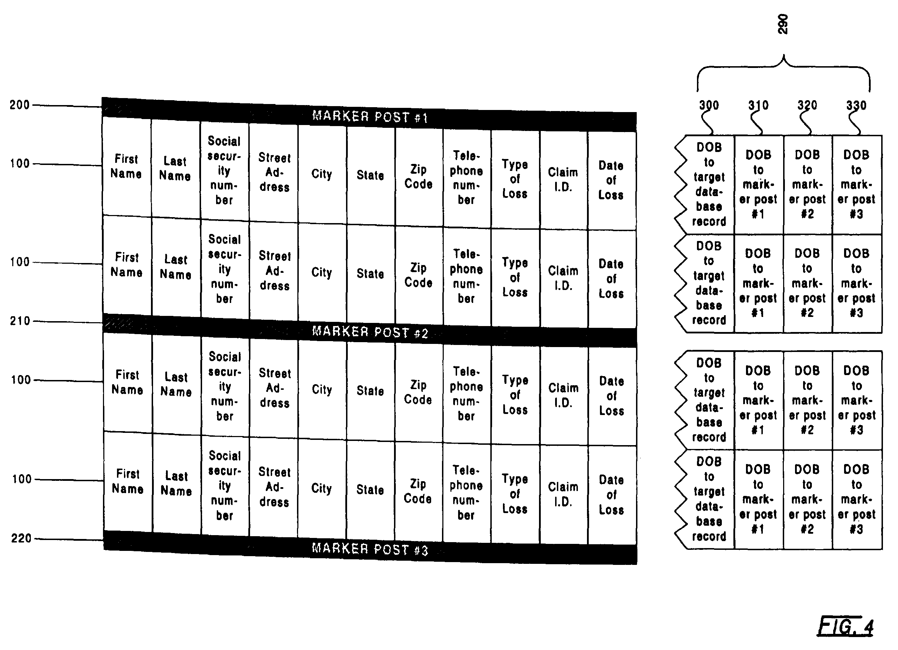

The matching mode DOB 300 is determined by the value of importance and the closeness of match that is assigned to each data field 102-122 of the database records 100. Referring to Fig. 4, after the matching mode's DOB 300 is calculated, the system creates a project file 290. The project file 290 consists of individual project records which correspond to each database record 100 contained in the Original Database 2000. The project file 290 stores the matching mode's DOB 300 corresponding to each database record 100, in the first column of the appropriate project record.

The project file 290 in one embodiment of the invention, is configured to contain the following information: the identity of the corresponding database records 100; the type of match method for each data field 102-122; values of importance for each data field; the numeric field to be used for cluster sums; results of the last matching mode 2310 search; and the results of the last clustering mode 2320 search. The project file 290 is a collection of parameters, including the matching mode DOB 300 and the clustering mode DOB 310-330, which are essential to identifying related database records 100. The various database records 100 are sorted and arranged by the various DOB contained in their corresponding project record. The integrity of the Original Database 2000 is maintained by keeping the project file 290 separated from the Original Database 2000. A single Original Database 2000 may be the subject of several project files 290. An indexing system is used to correlate the database records 100 to their appropriate project record. The system uses the matching mode DOBs 300 for each database record 100 to sort and identify database records 100 related to the targeted record.

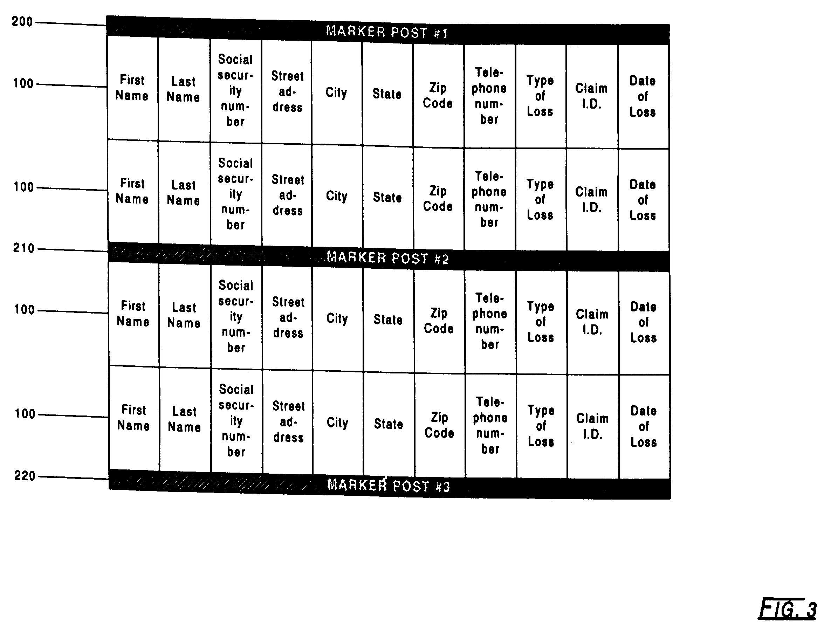

However, referring to Fig. 1, if the clustering mode 2320 is being used, the invention calculates clustering DOBs as shown at block 5800, between each database record 100 and a plurality of marker posts 200-220. The marker posts 200-220 do not represent actual database records 100 contained in the Original Database 2000, but rather reference values that have been created from the various data fields 102-122 of the database records 100. Thus, Fig. 3 and Fig. 4 are conceptual (not actual) views of how the marker posts 200-220 relate to the database records 100.

As shown in Fig. 3 and Fig. 4, the ideal marker posts 200-220 are widely scattered throughout the range of data, based on the values assigned to each data field 102-122. For example, a first marker post 200 could be positioned in the range of the data, calculated on all of the marker post's data fields' values being set to the maximum. A second marker post 210 could be positioned at a different location in the range of data by setting all of its data fields' values to their minimum. A third marker post 220 could be positioned at another location in the range of the data based on half of its data fields' values being set to their maximum and the other half of the data fields' values set to their minimum.

The clustering mode DOBs 310-330 for each database record 100 are also stored in their corresponding project records that are contained in the project file 290. In one embodiment of the invention, the clustering mode DOB 310 for the first marker post for each database record 100 is stored in column two of the project record. The clustering mode DOB 320 for the second marker post for each database record 100 will be stored in column three of the appropriate project record in the project file 290. The clustering mode DOB 330 for the third marker post for each database record 100 will be stored in column four of the project record and so on for as many marker posts as are utilized.

Once all the marker posts' DOBs 310-330 have been completed, the user has the capability to set and vary the cluster size and the threshold value for each clustering mode 2320 search. During clustering mode 2320, the invention rounds off the clustering mode DOBs for each database record 100 to the nearest cluster. The invention assigns all of the database records 100 having the same overall rounded DOB to all marker posts 200-220 to the same cluster. The clusters having a total value less than the user defined threshold amount are disregarded. The invention completes the clustering mode 2320 search by sorting the database records 100 by cluster and cluster value.

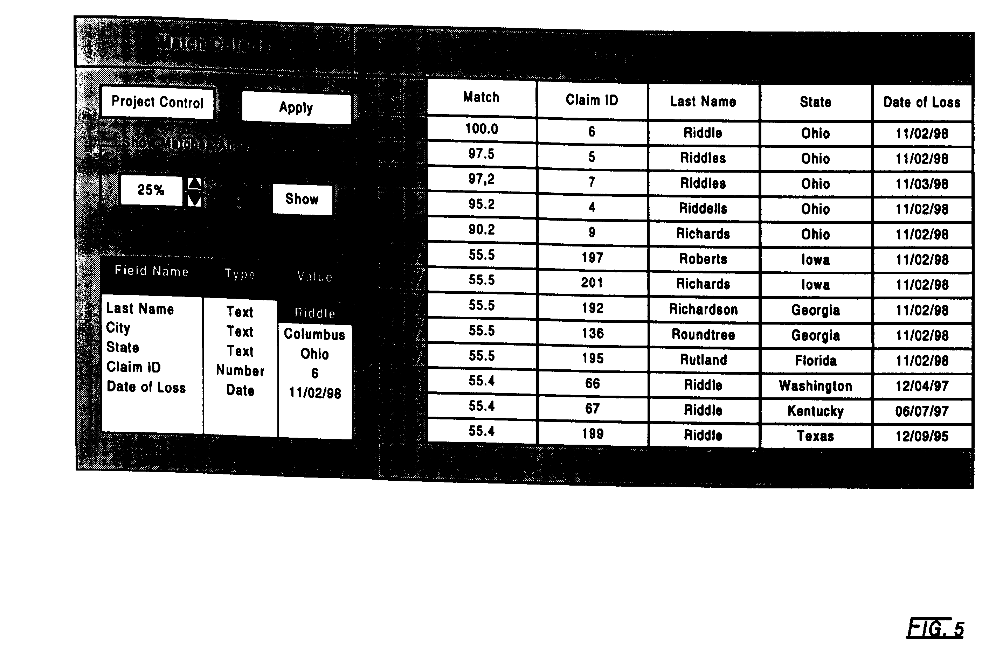

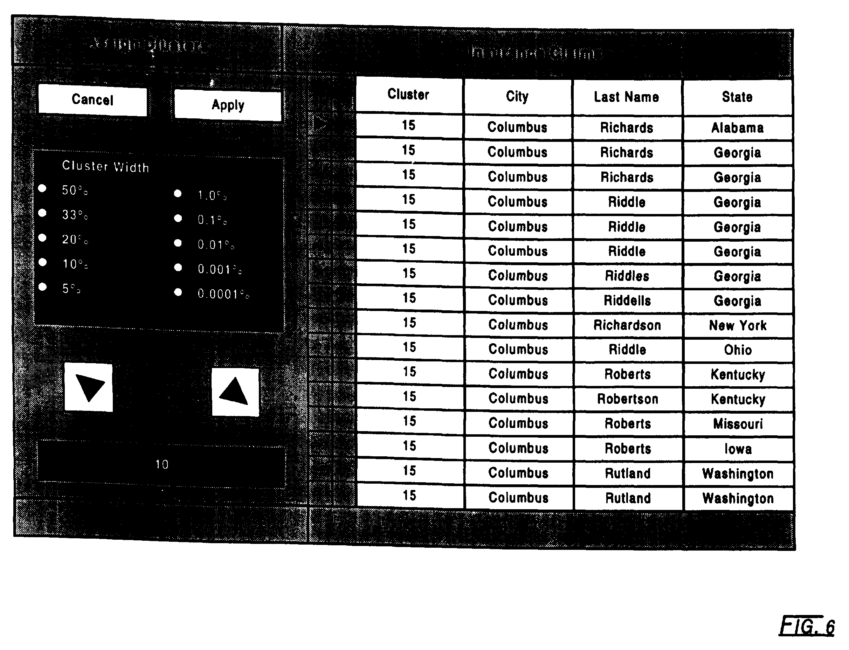

Upon the conclusion of either the matching mode 2310 or clustering mode 2320 search, the invention displays the related database records 100 for further analysis by the user. Fig. 5 is a representation of a screen employed by the user to perform a matching mode 2310 search. Similarly, the screen displayed in Fig. 6 is employed by the user to perform a clustering mode 2320 search. Each of the two screens has the capability of allowing the user to select certain database records 100 for additional examination. The database records 100 which have been selected by the user are output to a data file and/or to a visually perceivable readout for further review.

**Claims**

1. A method for identifying relationships between data records within a database in accordance with predetermined selection criteria, comprising the steps of:

providing a database containing a plurality of data records each having data fields in a predetermined, common format;
assigning a value of importance to selected data fields within selected records for use in determining said relationships between said data records;
assigning a marching value to selected data fields within select records for use in determining said relationship between said data records;
selecting a mode for processing said assigned values from a plurality of data processing modes;
deriving a first degree of belonging between each data record within said database and mode-specific reference criteria;
assigning said degree of belonging to each of said data records into a project record corresponding to each said data record;
selecting said data records having a predetermined first degree of belonging; and
grouping said selected data records for storage, further processing and/or analysis.

**2.** The method of claim 1 wherein said further processing additionally comprises the steps of:

displaying said group of matched records on a visually perceivable readout;

selecting from said group those records which meet a second degree of belonging; and

generating a tabular compilation incorporating data from selected said data records being associated with both said first and second degrees of belonging.

**3.** The method of Claim 1 in which deriving said first degree of belonging includes the steps of:

selecting a target data record; and
assigning said first degree of belonging between said target data record and each of said selected data records.

**4.** The method of Claim 1 in which deriving said first degree of belonging includes the steps of:

computing marker post values from within a range of data found in said data fields;
determining a third degree of belonging between said marker post values and selected data records;
processing the third degree of belonging values corresponding to said select data records; and
grouping said select data records having predetermined third degree of belonging values.

**5.** A data processing system for determining relationships between data records in a database, comprising:

a computing device having a processor for processing data, said computing device having a first memory means for storing machine-executable commands and a second memory means for storing said data records;
an input device for accepting instructions and/or data from an outside source;
an output device for conveying processed data in a perceivable manner; and
a data processing routine for identifying relationships between data records in a database wherein said routine:
derives a first degree of belonging between each data record within said database and mode-specific reference criteria based upon assigned values of importance and matching method corresponding to select data records;
assigns a degree of belonging to each of said data records into a project record corresponding to each said data record;
selects said data records having a predetermined first degree of belonging; and
groups said selected data records for storage, further processing and/or analysis.

"ORIGINAL DATABASE"
STANDARDIZED DATABASE RECORD — 2000

USER SETS VALUE OF IMPORTANCE AND
MATCHING METHOD FOR EVERY FIELD — 2100

2300
USER
SELECTS

2310 — MATCHING
MODE

CLUSTERING
MODE — 2320

5400 — PROGRAM ASSIGNS SEVERAL MARKER POSTS WIDELY
SPACED WITHIN DATA RANGE

2500 — USER SELECTS TARGET
DATABASE RECORD TO BE
MATCHED

5800 — PROGRAM SCANS THROUGH ALL DATABASE RECORDS
ASSIGNING A "DEGREE OF BELONGING" BETWEEN
EVERY DATABASE RECORD AND EVERY MARKER POST

5900 — USER SETS CLUSTER SIZE AND
THRESHOLD VALUE

3100 — PROGRAM SCANS THROUGH
ALL DATABASE RECORDS
ASSIGNING A "DEGREE OF
BELONGING" TO EVERY
DATABASE RECORD

6100 — PROGRAM ROUNDS OFF DEGREE OF BELONGING TO
NEAREST CLUSTER

6500 — DATABASE RECORDS HAVING SAME DEGREE OF
BELONGING TO ALL MARKER POSTS ARE ASSIGNED
TO THE SAME CLUSTER

6700 — CLUSTERS HAVING A TOTAL VALUE LESS THAN
THRESHOLD ARE DISREGARDED

3800 — DATABASE RECORDS ARE
SORTED BY DEGREE OF
BELONGING

6900 — DATABASE RECORDS ARE SORTED BY CLUSTER AND
BY CLUSTER VALUE

EXPERT USER REVIEWS SORTED DATABASE RECORDS
AND MANUALLY FLAGS DATABASE RECORDS OF
INTEREST — 8100

DATABASE OF DATABASE RECORDS OF INTEREST — 9000

FIG. 1

10

FIG. 2

| First Name | Last Name | Social security number | Street address | City | State | Zip Code | Telephone number | Type of Loss | Claim I.D. | Date of Loss |
|---|---|---|---|---|---|---|---|---|---|---|
| 102 | 104 | 106 | 108 | 110 | 112 | 114 | 116 | 118 | 120 | 122 |

100

EP 1 043 666 A2

| MARKER POST #1 | | | | | | | | | | |
|---|---|---|---|---|---|---|---|---|---|---|
| First Name | Last Name | Social security number | Street address | City | State | Zip Code | Telephone number | Type of Loss | Claim I.D. | Date of Loss |
| First Name | Last Name | Social security number | Street address | City | State | Zip Code | Telephone number | Type of Loss | Claim I.D. | Date of Loss |
| MARKER POST #2 | | | | | | | | | | |
| First Name | Last Name | Social security number | Street address | City | State | Zip Code | Telephone number | Type of Loss | Claim I.D. | Date of Loss |
| First Name | Last Name | Social security number | Street address | City | State | Zip Code | Telephone number | Type of Loss | Claim I.D. | Date of Loss |
| MARKER POST #3 | | | | | | | | | | |

*FIG. 3*

EP 1 043 666 A2

290

300 310 320 330

| MARKER POST #1 | | | | | | | | | | |
|---|---|---|---|---|---|---|---|---|---|---|
| First Name | Last Name | Social security number | Street Address | City | State | Zip Code | Telephone number | Type of Loss | Claim I.D. | Date of Loss |
| First Name | Last Name | Social security number | Street Address | City | State | Zip Code | Telephone number | Type of Loss | Claim I.D. | Date of Loss |
| MARKER POST #2 | | | | | | | | | | |
| First Name | Last Name | Social security number | Street Address | City | State | Zip Code | Telephone number | Type of Loss | Claim I.D. | Date of Loss |
| First Name | Last Name | Social security number | Street Address | City | State | Zip Code | Telephone number | Type of Loss | Claim I.D. | Date of Loss |
| MARKER POST #3 | | | | | | | | | | |

| DOB to target database record | DOB to marker post #1 | DOB to marker post #2 | DOB to marker post #3 |
|---|---|---|---|
| DOB to target database record | DOB to marker post #1 | DOB to marker post #2 | DOB to marker post #3 |

| DOB to target database record | DOB to marker post #1 | DOB to marker post #2 | DOB to marker post #3 |
|---|---|---|---|
| DOB to target database record | DOB to marker post #1 | DOB to marker post #2 | DOB to marker post #3 |

FIG. 4

Project Control [Apply]

[Show]

25% ▲▼

| Field Name | Type | Value |
|---|---|---|
| Last Name | Text | Riddle |
| City | Text | Columbus |
| State | Text | Ohio |
| Claim ID | Number | 6 |
| Date of Loss | Date | 11/02/98 |

| Match | Claim ID | Last Name | State | Date of Loss |
|---|---|---|---|---|
| 100.0 | 6 | Riddle | Ohio | 11/02/98 |
| 97.5 | 5 | Riddles | Ohio | 11/02/98 |
| 97.2 | 7 | Riddles | Ohio | 11/03/98 |
| 95.2 | 4 | Riddells | Ohio | 11/02/98 |
| 90.2 | 9 | Richards | Ohio | 11/02/98 |
| 55.5 | 197 | Roberts | Iowa | 11/02/98 |
| 55.5 | 201 | Richards | Iowa | 11/02/98 |
| 55.5 | 192 | Richardson | Georgia | 11/02/98 |
| 55.5 | 136 | Roundtree | Georgia | 11/02/98 |
| 55.5 | 195 | Rutland | Florida | 11/02/98 |
| 55.4 | 66 | Riddle | Washington | 12/04/97 |
| 55.4 | 67 | Riddle | Kentucky | 06/07/97 |
| 55.4 | 199 | Riddle | Texas | 12/09/95 |

FIG. 5

14

EP 1 043 666 A2

**Cancel**  **Apply**

Cluster Width

- 50% 
- 33%
- 20%
- 10%
- 5%

- 1.0%
- 0.1%
- 0.01%
- 0.001%
- 0.0001%

▼  ▲

10

| Cluster | City | Last Name | State |
|---|---|---|---|
| 15 | Columbus | Richards | Alabama |
| 15 | Columbus | Richards | Georgia |
| 15 | Columbus | Richards | Georgia |
| 15 | Columbus | Riddle | Georgia |
| 15 | Columbus | Riddle | Georgia |
| 15 | Columbus | Riddle | Georgia |
| 15 | Columbus | Riddles | Georgia |
| 15 | Columbus | Riddells | Georgia |
| 15 | Columbus | Richardson | New York |
| 15 | Columbus | Riddle | Ohio |
| 15 | Columbus | Roberts | Kentucky |
| 15 | Columbus | Robertson | Kentucky |
| 15 | Columbus | Roberts | Missouri |
| 15 | Columbus | Roberts | Iowa |
| 15 | Columbus | Rutland | Washington |
| 15 | Columbus | Rutland | Washington |

FIG. 6